# EUROPÄISCHE PATENTANMELDUNG

(11) **EP 3 263 271 A1**
(43) Veröffentlichungstag der Anmeldung: **03.01.2018**
(21) Anmeldenummer: 16177318.9
(22) Anmeldetag: 30.06.2016
(51) Int. Cl.: B23K 26/00, C03C 23/00, B41M 5/26, B23K 103/00

(54) **VERFAHREN ZUM BEARBEITEN DER OBERFLÄCHE VON VORGESPANNTEN GLÄSERN**

(71) Anmelder: Cero GmbH, 32423 Minden (DE)
(72) Erfinder: WIENKAMP, Andreas, 32429 Minden (DE)
(74) Vertreter: Nunnenkamp, Jörg

(57) **Zusammenfassung**

Gegenstand der Erfindung ist ein Verfahren zum Bearbeiten der Oberfläche von vorgespannten Gläsern, insbesondere von thermisch vorgespannten Glasplatten oder Glasscheiben (1). Dabei werden mit Hilfe eines gepulsten Laserstrahls (4) mehrere voneinander beabstandete Lasermarkierungen (3) erzeugt. Erfindungsgemäß dringt der Laserstrahl (4) bis maximal zur Zonengrenze (1c) in die Oberfläche der betreffenden Glasplatte oder Glasscheibe (1) mit einer Pulsenergie von 10 mJ bis 50 mJ pro Einzelpuls ein.

## Beschreibung

Die Erfindung betrifft ein Verfahren zum Bearbeiten der Oberfläche von vorgespannten Gläsern, insbesondere von thermisch vorgespannten Glasplatten oder Glasscheiben, wonach mit Hilfe eines gepulsten Laserstrahls mehrere voneinander beabstandete Lasermarkierungen erzeugt werden.

Vorgespannte Gläser weisen typischerweise Zonen verschiedener Spannungen auf. Meistens wird zwischen einer Druckspannungszone und einer Zugspannungszone unterschieden, die durch eine Zonengrenze voneinander getrennt sind. Bei vorgespannten Gläsern und insbesondere thermisch vorgespannten Glasplatten oder Glasscheiben befindet sich die jeweilige Druckspannungszone außen im Bereich der Oberfläche und die Zugspannungszone innen. Im Rahmen der Erfindung geht es vorzugsweise um Einscheiben-Sicherheitsglas bzw. ESG, welches aus einer einzigen speziell wärmebehandelten Glasscheibe respektive einer einzigen thermisch vorgespannten Glasplatte oder Glasscheibe aufgebaut ist. Der Begriff Glasplatte oder Glasscheibe meint im Rahmen der Erfindung nicht nur flache Elemente, sondern schließt auch nach innen oder nach außen gewölbte oder gebogene Glasplatten mit ein. Ebenso können mehrere der fraglichen Glasplatten oder Glasscheiben zu einer Verbundscheibe zusammengefasst werden.

Tatsächlich wird das bevorzugte Einscheiben-Sicherheitsglas während der Verarbeitung auf Temperaturen oberhalb seiner Transformationstemperatur erhitzt und danach schlagartig wieder abgekühlt. Als Folge hiervon kühlen sich oberflächennahe Zonen des Glases schneller ab als der innere Kern. Dadurch entsteht im Kern die bereits angesprochene Zugspannungszone, während in oder an der Oberfläche jeweils Druckspannungszonen beobachtet werden. Solche Einscheiben-Sicherheitsgläser zeichnen sich durch eine erhöhte Stoß- und Schlagfestigkeit im Vergleich zu normalem (Flach-) Glas aus.

Beispielsweise werden Bruchfestigkeiten nach DIN EN 12150 von typischerweise mehr als 90 N/mm² beobachtet. Regelmäßig liegen die Bruchfestigkeiten sogar noch höher, beispielsweise bei 100 N/mm² im Minimum und meistens sogar bei 130 N/mm² und mehr. Dadurch sind solche Einscheiben-Sicherheitsglasplatten oder -glasscheiben überall dort für den Einsatz prädestiniert, wo nicht nur eine erhöhte Stoß- und Schlagfestigkeit erforderlich ist, sondern Sicherheitsaspekte zum Tragen kommen. Denn Einscheiben-Sicherheitsglas zerfällt bei sehr hoher Belastung in kleine Scherben, wodurch sich die Verletzungsgefahr im Vergleich zu normalem Flachglas erheblich verringert. Aus diesem Grund kommen Einscheiben-Sicherheitsglasscheiben oder -platten beispielsweise im Automobilbau für Seitenscheiben zum Einsatz oder werden auch im Baubereich als Strukturelemente eingesetzt.

So kennt man beispielsweise Duschkabinen oder auch Glastüren, die unter Rückgriff auf Einscheiben-Sicherheitsglas produziert werden, wie dies beispielhaft in der gattungsbildenden DE 10 2011 000 157 A1 beschrieben wird. Hier geht es um ein rahmenfreies Glaselement, welches als Glastür, Balkongeländer, Trennwand und dergleichen eingesetzt werden kann. Die Glasscheibe weist zumindest eine Schicht aus Einscheiben-Sicherheitsglas auf.

Außerdem ist in zumindest eine Oberfläche der Glasscheibe wenigstens bereichsweise eine Gravur eingebracht. Die Gravur wird mittels einer Laserbestrahlung der Glasscheibe in der Oberfläche definiert. Dadurch lässt sich eine hohe mechanische Beständigkeit sowie problemlose Herstellung und lange Haltbarkeit erreichen.

Im Rahmen der DE 20 2011 110 686 U1 wird ein Brandschutz-Verbundglas beschrieben, bei dem das vorgespannte Glas mit wenigstens einer lokalen Schwächung ausgerüstet ist. Bei der lokalen Schwächung handelt es sich um eine solche, die per Laser eingebracht werden kann.

Im weiteren Stand der Technik nach der EP 1 138 516 B1 geht es um ein Verfahren zum Einbringen wenigstens einer Innengravur in einen flachen Körper aus transparentem Material. Bei dem flachen Körper kann es sich um ein Flachglas mit einer mechanischen Vorspannung handeln. Das Fokussieren des Laserstrahls erfolgt dabei unterhalb der Oberfläche in dem Abschnitt des Flachglases, der unter Druckspannung steht. Einzelheiten zum eingesetzten Laser werden nicht erörtert.

Der Stand der Technik hat sich grundsätzlich bewährt. Allerdings fehlen bisher nachvollziehbare Vorgaben derart, dass die Markierung in die Oberfläche des vorgespannten Glases dauerhaft und ohne Bruchgefahr eingebracht werden kann. Tatsächlich besteht bei solchen vorgespannten Gläsern bzw. Glasscheiben oder Glasplatten die Gefahr, dass die fragliche Markierung oder ein hiervon ausgehender Riss die Zugspannungszone erreicht, obwohl diese im Innern der betreffenden Glasplatte oder Glasscheibe angeordnet ist. Es ist jedoch bekannt, dass eine Bearbeitung, die bis in die Zugspannungszone des Glases vordringt, praktisch zwangsläufig zum Bruch der Glasscheibe führt. Hier setzt die Erfindung ein.

Der Erfindung liegt das technische Problem zugrunde, ein derartiges Verfahren so weiterzuentwickeln, dass die mechanischen Eigenschaften des jeweils an der Oberfläche bearbeiteten vorgespannten Glases gegenüber dem unbearbeiteten Glas in etwa gleich bleiben. Insbesondere kommt es darauf an, die Bruchfestigkeit gegenüber unbehandeltem Glas größtenteils beizubehalten. Zur Lösung dieser technischen Problemstellung ist ein gattungsgemäßes Verfahren im Rahmen der Erfindung dadurch gekennzeichnet, dass der gepulste Laserstrahl bis maximal zur Zonengrenze, insbesondere bis maximal hälftig zur Zonengrenze, in die Oberfläche des betreffenden vorgespannten Glases mit einer Pulsenergie von 10 mJ bis 50 mJ pro Einzelpuls eindringt.

Nach vorteilhafter Ausgestaltung wird an der vom Laser bearbeiteten Oberfläche des Glases und insbesondere der thermisch vorgespannten Glasplatte oder Glasscheibe eine kontrollierte Kerbwirkung zumindest im Bereich der jeweiligen Lasermarkierungen beobachtet. Diese kontrollierte Kerbwirkung korrespondiert zu einer bestimmten Bruchfestigkeit des Glases, die nach wie vor und im Minimum erreicht wird und im Rahmen der Erfindung Werte von wenigstens 70 N/mm² und insbesondere von wenigstens 90 N/mm² beträgt.

D. h., nach der mit Hilfe des Lasers erfolgten Bearbeitung werden Bruchfestigkeiten von im Minimum 70 N/mm² beobachtet. Meistens liegen die Bruchfestigkeiten sogar noch deutlich höher, sind bei wenigstens 90 N/mm², sogar typischerweise bei 100 N/mm² und ganz besonders bevorzugt bei 130 N/mm² und mehr angesiedelt, jeweils gemessen nach DIN EN 12150.

Neben der angegebenen Pulsenergie ist in diesem Zusammenhang noch von Bedeutung, dass die fragliche vorgespannte Glasplatte oder Glasscheibe punktweise bearbeitet wird, wobei die einzelnen Punkte bzw. Schwächungspunkte regelmäßig einen Abstand von 1 mm oder noch weniger zueinander aufweisen. Dadurch wird die solchermaßen bearbeitete vorgespannte Glasplatte oder Glasscheibe mit definierten flächenmäßig eingegrenzten sowie matrixartig über die Oberfläche verteilten Schwächungspunkten ausgerüstet. Selbstverständlich können die Schwächungspunkte auch über die gesamte Oberfläche verteilt angeordnet werden. Dadurch kann die solchermaßen bearbeitete Glasplatte oder Glasscheibe unter Berücksichtigung dieser Vorgaben gezielt und kontrolliert geschwächt werden.
Tatsächlich werden nach der solchermaßen erfolgten Bearbeitung Bruchfestigkeiten von im Minimum 70 N/mm² beobachtet. Meistens liegen die Bruchfestigkeiten sogar noch deutlich höher, sind bei wenigstens 90 N/mm², sogar meistens bei 100 N/mm² und ganz besonders bevorzugt bei 130 N/mm² und mehr angesiedelt, jeweils gemessen nach DIN EN 12150.

Im Gegensatz zum an dieser Stelle in der Praxis eingesetzten Sandstrahlen kann folglich das solchermaßen bearbeitete vorgespannte Glas an seiner Oberfläche kontrolliert geschwächt werden, wobei nach wie vor die zuvor angegebene Norm für die Bruchfestigkeit eingehalten wird. Demgegenüber ist eine solche kontrollierte Bearbeitung beim Sandstrahlen schon deshalb nicht möglich, weil hier Luftdruckschwankungen, Änderungen des Düsendrucks, Schwankungen in der Zusammensetzung des Strahlmaterials etc. zu berücksichtigen sind, die eine kontrollierte Bearbeitung nicht zulassen.

Die Erfindung greift also zunächst einmal auf einen gepulsten Laserstrahl zurück, dessen Pulsenergie im beanspruchten Bereich von 10 mJ bis 50 mJ pro Einzelpuls angesiedelt ist. In Verbindung mit der weiteren Vorgabe, dass der Laserstrahl bis maximal zur Zonengrenze und insbesondere bis maximal hälftig zur Zonengrenze in die Oberfläche eindringt, wird insgesamt und zusammenfassend sichergestellt, dass die Bearbeitung der Oberfläche des vorgespannten Glases und insbesondere der thermisch vorgespannten Glasplatten oder Glasscheiben nicht die Zugspannungszone erreicht. Tatsächlich sind die Druckspannungszone und die Zugspannungszone durch die fragliche Zonengrenze voneinander getrennt. Außerdem arbeitet die Erfindung regelmäßig mit Einscheiben-Sicherheitsglas (ESG). Selbstverständlich kann auf vergleichbare Art und Weise auch Verbundsicherheitsglas (VSG) bearbeitet werden. In diesem Fall lassen sich eine oder mehrere der miteinander durch beispielsweise eine zwischengeschaltete Kunststofffolie verbundenen vorgespannten Glasplatten oder Glasscheiben in entsprechendem Sinne bearbeiten.

Hierbei geht die Erfindung von der Erkenntnis aus, dass die fraglichen Glasplatten bzw. Glasscheiben typischerweise eine Materialstärke im Bereich von 3 mm bis 20 mm aufweisen. Wenn man dann noch von Einscheiben-Sicherheitsglas bzw. entsprechenden Einscheiben-Sicherheitsglasplatten oder -glasscheiben ausgeht, so sind die fraglichen Glasplatten bzw. Glasscheiben mit einer äußeren Druckspannungszone im Bereich der Oberfläche und der inneren Zugspannungszone ausgerüstet. Die Druckspannungszone und die Zugspannungszone sind durch die Zonengrenze voneinander getrennt. Außerdem stellen sich die Zonen meistens so dar, dass die Zugspannungszone in etwa 50% bis 70% der Materialstärke einnimmt, wohingegen die Druckspannungszone ca. 30% bis 50% der gesamten Materialstärke aufweist.

Da die Zugspannungszone im Innern der betreffenden Glasplatte bzw. Glasscheibe angesiedelt ist und sich im Bereich der oberen und unteren Oberfläche jeweils eine Druckspannungszone befindet, ist mit einer Stärke der jeweiligen Druckspannungszone nahe der Oberfläche der Glasplatte bzw. Glasscheibe im Bereich von 15% bis 30% bezogen auf die Materialstärke der fraglichen Glasplatte bzw. Glasscheibe zu rechnen. Daraus resultiert im Beispielfall eine Stärke der fraglichen Druckspannungszone von wenigstens 0,45 mm für Glasplatten bzw. Glasscheiben mit der Materialstärke von 3 mm bis hin zu einer Stärke der Druckspannungszone von 3 mm im Minimum bei einer Materialstärke von 20 mm.

Der Laserstrahl wird nun so fokussiert, dass er maximal bis zur Zonengrenze in die Oberfläche der fraglichen Glasplatte oder Glasscheibe eindringt, das heißt im Maximum mit einer Eindringtiefe von 450 µm ausgerüstet ist. Im Regelfall wird die Eindringtiefe des Laserstrahls jedoch auf einen Bereich von 50 µm bis 300 µm und insbesondere 50 µm bis 200 µm begrenzt. Dadurch wird zugleich sichergestellt, dass der Laserstrahl bis maximal in etwa hälftig zur Zonengrenze in die Oberfläche eindringen kann, was einer Eindringtriefe von ca. 230 µmbei 3 mm Materialstärke entspricht. Sofern die Materialstärke der Glasplatte oder Glasscheibe größer ist, stellt sich die prozentuale Eindringtiefe noch viel kleiner dar und ergibt sich folgerichtig ein größerer Abstand zur Zonengrenze.

Jedenfalls wird durch die angegebenen Bemessungsgrenzen sichergestellt, dass der Laserstahl mit der angegebenen Pulsenergie von 10 mJ bis 50 mJ pro Einzelpuls unter Berücksichtigung der Eindringtiefe von 50 µm bis 500 µm ausschließlich die äußere Druckspannungszone der im Regelfall eingesetzten Einscheiben-Sicherheitsglasplatte oder -glasscheibe erreicht. Dadurch ist ein Bruch der solchermaßen bearbeiteten Glasplatte oder Glasscheibe ausgeschlossen. Zugleich beobachtet man erfindungsgemäß eine nur geringfügig gegenüber einer unbehandelten Glasplatte oder Glasscheibe abnehmende Bruchfestigkeit.

Tatsächlich kann die Bruchfestigkeit kontrolliert eingestellt werden, nämlich über die kontrollierte Kerbwirkung, weil die Glasplatte mit Hilfe des Lasers die beschriebene kontrollierte Schwächung erfährt. Im Maximum wird eine Abnahme der Bruchfestigkeit von 25 % beobachtet, und zwar für den Fall, dass eine Oberfläche der Glasplatte oder Glasscheibe mit dem Laser bearbeitet wird. So wird meistens vorgegangen.

Tatsächlich verfügen solche Einscheiben-Sicherheitsglasplatten oder -glasscheiben typischerweise über eine Bruchfestigkeit, die im Regelfall bei 120N/mm² und mehr vor der Laserbearbeitung beträgt. Nach der Laserbearbeitung werden Werte für die Bruchfestigkeit von mehr als 90 N/mm² gemessen, so dass nach wie vor Werte für die Bruchfestigkeit erreicht werden, die im Sinne der Norm DIN EN 12150 zulässig sind. Hierin sind die wesentlichen Vorteile zu sehen.

Nach vorteilhafter Ausgestaltung verfügt der Laserstrahl über einen Fokusdurchmesser im Bereich von 100 µm bis 400 µm, insbesondere im Bereich von 100 µm bis 300 µm. Hierbei wird typischerweise mit einer Brennweite von 50 mm bis 150 mm, insbesondere einer Brennweite im Bereich von ca. 100 mm gearbeitet. Außerdem hat es sich bewährt, wenn der eine Laserquelle ausgangsseitig verlassende Laserstrahl aufgeweitet wird. Hier hat sich eine Aufweitung auf Werte im Bereich von 8 mm bis 15 mm für den aufgeweiteten Strahldurchmesser als besonders günstig erwiesen. Dadurch kann der Fokus wunschgemäß auf die besonders bevorzugten Werte im Bereich von 100 µm bis 300 µm eingestellt werden.

Außerdem arbeitet das erfindungsgemäße Verfahren im sogenannten Einzelschussmodus. Das heißt, jede Lasermarkierung in bzw. an der Oberfläche der zu bearbeitenden Glasplatte oder Glasscheibe wird mit nur einem einzigen Schuss erzeugt, um im Endeffekt sicherzustellen, dass ausschließlich die oberflächennahe Druckspannungszone bearbeitet wird. In die gleiche Richtung zielen die Maßnahmen zur Begrenzung der Pulsenergie im Bereich von 10 mJ bis 50 mJ pro Einzelimpuls.

Die fragliche mittlere und zuvor angegebene Pulsenergie ergibt sich beispielhaft für den Fall, dass mit Laserpulsen einer Pulsdauer von ca. 100 µs und einer mittleren Leistung von 20 W gearbeitet wird. Geht man hierbei von einer Pulswiederholfrequenz von beispielsweise 560 Hz aus, so errechnet sich die Pulsenergie für den Einzelpuls aus dem Produkt der mittleren Leistung von 20 W multipliziert mit der Periodendauer von in etwa 1,8 ms, so dass hieraus eine Pulsenergie für den Einzelpuls von 36 mJ im Beispielfall resultiert.

Als an dieser Stelle geeignete Laserquelle mag ein CO₂-Laser zum Einsatz kommen. Das gilt selbstverständlich nur beispielhaft, weil genauso gut mit einem Nd:YAG-Laser oder auch mit anderen Lasertypen gearbeitet werden kann.

Ferner hat es sich als günstig erwiesen, wenn mit einem Tastverhältnis von 5% bis maximal 50% und vorzugsweise bis maximal 40% gearbeitet wird. Das Tastverhältnis (duty cycle) gibt dabei wie üblich das zeitliche Verhältnis von Pulsdauer zu Pulsperiode an. Das heißt, der Laserpuls verfügt über eine Pulsdauer, die 5% bis maximal 50% und vorzugsweise bis maximal ca. 40% der Periodendauer beträgt.

Nach weiterer vorteilhafter Ausgestaltung mit besonderer Bedeutung ist zumindest ein Sensor zur Messung der Pulsenergie vorgesehen. Mit Hilfe dieses Sensors kann folglich die Pulsenergie des Einzelpulses gemessen werden. Aus den resultierenden Sensorwerten lassen sich demzufolge Steuer oder Regelwerte für die Ansteuerung der Laserquelle ableiten. Typischerweise wird hier mit einer Regelung in der Weise gearbeitet, dass die Pulsenergie pro Einzelpuls auf einem bestimmten und voreingestellten Wert gehalten wird.

Darüber hinaus kann auch auf einen weiteren Sensor zur Abstandsmessung zurückgegriffen werden. Mit Hilfe dieses Sensors wird der Abstand der Laserquelle bzw. einer ausgangsseitigen Fokussierlinse zur Oberfläche des zu bearbeitenden vorgespannten Glases ermittelt. Auf diese Weise können etwaige Abweichungen der Oberfläche der jeweiligen Glasplatte oder Glasscheibe von einem ebenen Profil berücksichtigt werden. Das heißt, mit Hilfe des Sensors zur Abstandsmessung kann ein "Höhenprofil" der zur bearbeitenden Glasplatte oder Glasscheibe erfasst werden. Hier haben sich gängige Messverfahren wie eine Lasertriangulation, eine Messung per Ultraschall oder auch eine mechanische Messung mit einem Taststift als günstig erwiesen.

In Abhängigkeit von diesem gemessenen Höhenprofil kann dann insgesamt die Laserquelle bzw. die Fokussierlinse nachgefahren werden, um sicherzustellen, dass der gepulste Laserstrahl mit durchweg gleichbleibender Eindringtiefe die Oberfläche bearbeitet. In diesem Fall wird die Strahlführung geändert. Alternativ oder zusätzlich kann auch eine Werkstückführung nachgefahren werden. Bei der Werkstückführung handelt es sich im einfachsten Fall um einen Tisch für die hierauf abgelegte Glasplatte oder Glasscheibe. Dazu mag die betreffende Werkstückführung ebenso wie die Strahlführung der Laserquelle insgesamt dreidimensional verfahrbar ausgebildet sein.

Im Ergebnis können mit Hilfe des beschriebenen Verfahrens Oberflächen von vorgespannten Gläsern und insbesondere von thermisch vorgespannten Glasplatten oder Glasscheiben sowie ganz besonders bevorzugt von EinscheibenSicherheitsglasplatten oder -glasscheiben bearbeitet werden. Da im Zuge der Bearbeitung durch die kontrollierte Kerbwirkung eine determinierte Schwächung der Glasplatte bzw. Glasscheibe erfolgt, lässt sich die (geringfüge) Abnahme der Bruchfestigkeit vor und nach der Bearbeitung vorhersagen und innerhalb vorgegebener Grenzen einstellen. Tatsächlich beobachtet man bei Einhaltung der angegebenen Parametergrenzen im Maximum eine Abnahme der Bruchfestigkeit von 25 % bei einem Vergleich der Bruchfestigkeit vor und nach der Bearbeitung. Dadurch lässt sich das solchermaßen behandelte Glas und insbesondere Einscheiben-Sicherheitsglas mit jeder denkbaren Markierung ausrüsten.

So ist es beispielsweise möglich, einzelne Lasermarkierungen gleichmäßig über einen bestimmten Bereich der Glasplatte oder Glasscheibe durch eine punktweise Bearbeitung im Abstand von 1 mm oder noch weniger auszurüsten. Dadurch kann die betreffende Glasplatte oder Glasscheibe sektionsweise undurchsichtig oder sogar "milchig" gestaltet werden, was bisher nur mit anderen aufwändigen Verfahren, beispielsweise durch Sandstrahlen erreicht wurde. Daneben lassen sich natürlich beliebige Ornamente, Bezeichnungen etc. in die Oberfläche eingravieren. Das alles gelingt unter Berücksichtigung der nach wie vor erfüllten Norm DIN EN 12150 zur Qualifizierung der solchermaßen bearbeiteten Glasplatte oder Glasscheibe als Einscheiben-Sicherheitsglas. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Vorrichtung zum Bearbeiten der Oberfläche von vorgespannten Gläsern und
- Fig. 2: einen schematischen Schnitt durch die betreffende Glasplatte oder Glasscheibe.

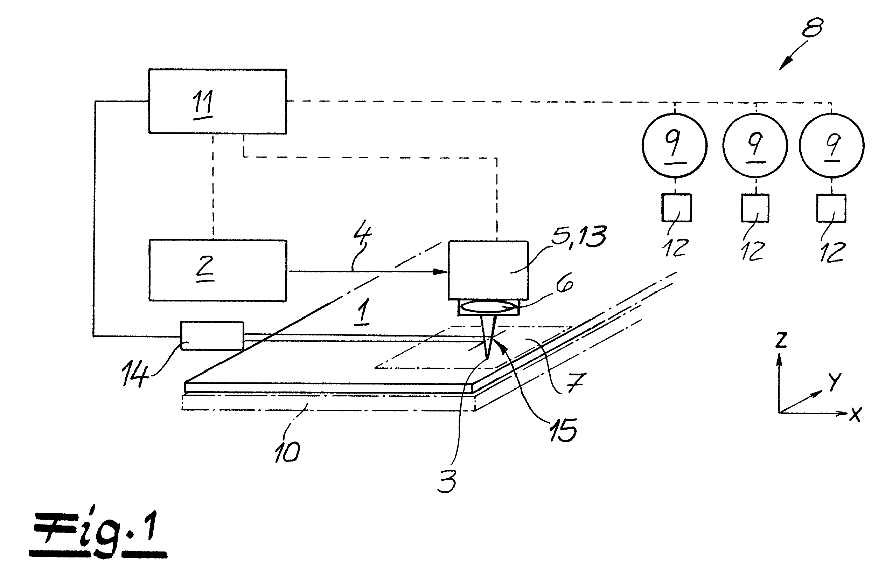

In der Fig. 1 ist eine Vorrichtung zum Bearbeiten einer Glasplatte oder Glasscheibe 1 dargestellt. Bei der Glasplatte oder Glasscheibe 1 handelt es sich im Ausführungsbeispiel und nicht einschränkend um eine Einscheiben-Sicherheitsglasscheibe oder -glasplatte. Zu diesem Zweck wird die fragliche Glasplatte oder Glasscheibe 1 mit einer großflächigen Oberflächengravur ausgerüstet, die dekorative Zwecke erfüllen kann, aber auch beispielsweise eine Rutschhemmung bewirkt, wenn die fragliche Glasplatte oder Glasscheibe 1 beispielsweise als Boden- oder Stufenbelag zum Einsatz kommt. Die angesprochene Oberflächengravur wird meistens an einer Oberfläche der betreffenden Glasplatte oder Glasscheibe 1 angebracht. Grundsätzlich können auch beide Oberflächen der betreffenden Glasplatte oder Glasscheibe 1 mit der nachfolgend noch zu beschreibenden Oberflächengravur ausgerüstet werden. Im Regelfall wird die fragliche Glasplatte oder Glasscheibe 1 für den Innenausbau benötigt, beispielsweise als Innentür, Duschkabine etc.. Selbstverständlich sind auch Anwendungen für den Außenbereich als Strukturelement denkbar, beispielsweise als Fassadenelement. Außerdem können hiermit Produkte wie Trennwände, Tischplatten, Glastüren, Türeinsätze realisiert werden. Genauso gut eignet sich eine entsprechend gestaltete Glasplatte oder Glasscheibe 1 für den Ladenausbau.

Die fragliche Glasplatte oder Glasscheibe 1 wird mit Hilfe eines gepulsten Laserstrahls 4 bearbeitet, welcher mit Hilfe einer gepulsten Laserquelle 2 erzeugt wird. Bei der Laserquelle 2 mag es sich um eine solche handeln, die auf einen gepulsten CO₂-Laser zurückgreift, der typische mittlere Ausgangsleistungen von ca. 20 W bis 200 W zur Verfügung stellt. Die Pulszeiten liegen im Regelfall im Bereich von 20 µs bis 500 µs, meistens zwischen 60 µs bis 120 µs. Außerdem wird erfindungsgemäß eine Pulsenergie von 10 mJ bis 50 mJ pro Einzelpuls beobachtet.

Als Folge hiervon können einzelne Lasermarkierungen 3 erzeugt werden, die insgesamt ein dekoratives Muster an der Oberfläche der fraglichen Glasplatte oder Glasscheibe 1 erzeugen. Zu diesem Zweck verlässt ein Laserstrahl 4 die gepulste Laserquelle 2 und wird durch eine Strahlführung 5, 6 auf die Oberfläche der Glasplatte oder Glasscheibe 1 gerichtet und abgelenkt. Die Strahlführung 5, 6 setzt sich im Beispielfall nach der Fig. 1 aus einer Galvanometer-Spiegelanordnung 5 und einer Fokussierlinse 6 zusammen. Auf diese Weise lassen sich die einzelnen Lasermarkierungen 3 auf der Oberfläche der Glasplatte bzw. Glasscheibe 1 erzeugen und definieren hier ein in der Fig. 1 lediglich angedeutetes Bearbeitungsfeld 7. In der Fig. 1 erkennt man darüber hinaus noch eine Werkstückführung 8. Die Werkstückführung 8 ist mit mehreren Motoren 9 ausgerüstet, die es erlauben, die fragliche Glasplatte oder Glasscheibe 1 in sämtlichen drei Raumrichtungen, d. h. in X-, Y- und Z-Richtung verfahren zu können.

Selbstverständlich kann alternativ oder zusätzlich die Strahlführung 5, 6 gegenüber der Glasplatte oder Glasscheibe 1 ebenfalls oder anstelle der Werkstückführung 8 verfahren werden. Hierbei kann auch mit einer reinen zweidimensionalen Verfahrbarkeit gearbeitet werden. Im Regelfall wird man jedoch auch für die Strahlführung 5, 6 in diesem Kontext eine Verfahrbarkeit in sämtlichen drei Raumrichtungen vorsehen.

Schließlich erkennt man in der Fig. 1 noch eine Steuereinheit 11, an welche die Strahlführung 5, 6 ebenso wie die einzelnen Motoren 9 der Werkstückführung 8 angeschlossen sind. Außerdem sind noch Wegsensoren 12 vorgesehen, mit deren Hilfe der einzelne Verfahrweg des zugehörigen Motors 9 der Werkstückführung 8 ermittelt und an die Steuereinheit 11 übertragen werden. Ein weiterer Sensor 13 dient zur Abstandsmessung der Laserquelle 2 bzw. der Strahlführung 5, 6 von der Oberfläche der betreffenden und zu bearbeitenden Glasplatte bzw. Glasscheibe 1.

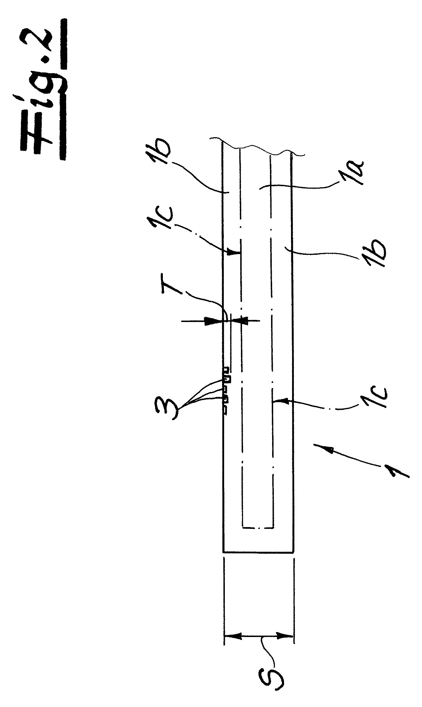

Anhand der Fig. 2 erkennt man, dass die fragliche Glasplatte bzw. Glasscheibe 1 vorgespannt ist. Tatsächlich findet sich im Innern der vorgespannten Glasplatte eine innere Zugspannungszone 1a. Jeweils im Bereich der sich gegenüberliegenden Oberflächen der Glasplatte bzw. Glasscheibe 1 ist demgegenüber eine Druckspannungszone 1b realisiert. Die innere Zugspannungszone 1a und die Druckspannungszone 1b sind durch eine Zonengrenze 1c voneinander getrennt. Anhand der Fig. 2 wird deutlich, dass die einzelnen Lasermarkierungen 3 mit einer Eindringtiefe T des Laserstrahls 4 ausgerüstet sind, welche die Zonengrenze 1c nicht erreicht.

Tatsächlich wird im Rahmen der Erfindung und bei der Bearbeitung der Oberfläche der thermisch vorgespannten Glasplatten oder Glasscheiben 1 so gearbeitet, dass der Laserstrahl 4 bis maximal zur Zonengrenze 1c in die Oberfläche eindringt, und zwar unter Berücksichtigung einer Pulsenergie von 10 mJ bis 50 mJ pro Einzelpuls. Meistens beträgt die Eindringtiefe T maximal die Hälfte der Breite bzw. Materialstärke der äußeren Druckspannungszone 1 b.

Auf diese Weise wird sichergestellt, dass die innere Zugspannungszone 1a vom Laserstrahl 4 ausdrücklich nicht erreicht wird und folglich die solchermaßen bearbeitete Glasplatte bzw. Glasscheibe 1 nach wie vor die Standards für Einscheiben-Sicherheitsglas aufweist. Tatsächlich liegt die Bruchfestigkeit nach DIN EN 12150 selbst nach Einbringen der Lasermarkierungen 3 deutlich über 70 N/mm². Das erreicht die Erfindung dadurch, dass die Eindringtiefe T des Laserstrahls 4 im Bereich von 50 µm bis 500 µm eingestellt wird.

Die Materialstärke S der betreffenden Glasscheibe bzw. Glasscheibe 1 ist im Ausführungsbeispiel im Bereich von ca. 5 mm bis 10 mm angesiedelt und eingestellt. Der Laserstrahl 4 weist beim Auftreffen auf die Oberfläche der betreffenden Glasplatte bzw. Glasscheibe 1 einen Fokusdurchmesser im Bereich von 100 µm bis 300 µm auf. Außerdem wird jeweils im Einzelschussbetrieb gearbeitet. Das heißt, jede der dargestellten Lasermarkierungen 3 wird nur mit einem einzigen Laserschuss erzeugt, der wiederum hierfür die zuvor bereits angesprochene Pulsenergie im Bereich zwischen 10 mJ bis 50 mJ pro Einzelpuls aufweist.

Um dies jeweils und im Detail zu erreichen, wird bei dem fraglichen Einzelschuss die Strahlführung 5, 6 im Ausführungsbeispiel angehalten bzw. nicht bewegt. Das gilt insbesondere für die Galvanometer-Spiegelanordnung 5, die ansonsten für die Ablenkung des Laserstrahls 4 zur Erzeugung der jeweiligen Lasermarkierungen 3 sorgt.

Neben dem Wegsensor 12 für den jeweiligen Motor 9 der Werkstückführung 8 und dem Sensor 13 für die Abstandsmessung der Laserquelle 2 bzw. der Strahlführung 5, 6 von der Oberfläche der Glasplatte bzw. Glasscheibe 1 ist noch ein weiterer Sensor 14 vorgesehen, mit dessen Hilfe die angegebene Pulsenergie gemessen und an die Steuereinheit 11 übermittelt werden kann. Dazu wird ein Teil des Laserstrahls 4 über einen Strahlteiler 15 in den fraglichen Sensor 14 ausgekoppelt. Je nach mit Hilfe des Sensors 14 gemessenen Werten für die Pulsenergie der einzelnen Laserpulse sorgt die Steuereinheit 11 dafür, dass die Laserquelle 2 entsprechend nachgeführt wird, damit die Pulsenergie gleichbleibend auf die Oberfläche der Glasplatte bzw. Glasscheibe 1 trifft.

Mit Hilfe des Sensors 13 zur Abstandsmessung kann ein Höhenprofil der betreffenden Glasplatte oder Glasscheibe 1 erfasst werden, wie dies einleitend bereits beschrieben wurde. Unter Berücksichtigung des Höhenprofils kann im Beispielfall die Werkstückführung 8 und damit die betreffende Glasplatte oder Glasscheibe 1 nachgefahren werden, und zwar so, dass die Eindringtiefe T über die gesamte Oberfläche der betreffenden Glasplatte oder Glasscheibe 1 jeweils gleichbleibend eingestellt wird. Dazu arbeitet die Erfindung typischerweise mit einer Regelung, welche das gemessene Höhenprofil in eine entsprechende Verfahrbewegung für die Werkstückführung 8 umsetzt.

Mit Hilfe der Steuereinheit 11 bzw. einer hierin hinterlegten Software wird der Laserstrahl 4 so gegenüber der zu bearbeitenden Glasplatte oder Glasscheibe 1 verfahren, dass sichergestellt ist, dass jeweils nur ein einzelner Laserschuss den gewünschten Schwächungspunkt erzeugt. D. h., die Steuereinheit 11 protokolliert die einzelnen eingebrachten Schwächungspunkte, wobei jeder Schwächungspunkt zu einem einzelnen Laserpuls bzw. Einzelpuls mit der angegebenen Pulsenergie gehört. Dabei wird die Strahlführung 5, 6 bzw. die Werkstückführung 8 während des Einzelschusses jeweils angehalten. Jedenfalls stellt die Steuereinheit 11 sicher, dass nicht mehrmals eine Stelle der Glasplatte oder Glasscheibe 1 bearbeitet wird.

## Patentansprüche

1. Verfahren zum Bearbeiten der Oberfläche von vorgespannten Gläsern, insbesondere von thermisch vorgespannten Glasplatten oder Glasscheiben (1), wonach mit Hilfe eines gepulsten Laserstrahls (4) mehrere voneinander beabstandete Lasermarkierungen (3) erzeugt werden, **dadurch gekennzeichnet, dass** der Laserstrahl (4) bis maximal zur Zonengrenze (1c), insbesondere bis maximal hälftig zur Zonengrenze (1c), in die Oberfläche mit einer Pulsenergie von 10 mJ bis 50 mJ pro Einzelpuls eindringt.

2. Verfahren nach Anspruch 1, **dadurch gekennzeichnet, dass** an der vom Laser bearbeiteten Oberfläche eine kontrollierte Kerbwirkung zumindest im Bereich der jeweiligen Lasermarkierungen (3) beobachtet wird, die zu einer Bruchfestigkeit des Glases von wenigstens 70 N/mm² und insbesondere von 90 N/mm² im Minimum korrespondiert.

3. Verfahren nach Anspruch 1 oder 2, **dadurch gekennzeichnet, dass** mit einer Eindringtiefe (T) des Laserstrahls (4) von 50 µm bis 500 µm, insbesondere von 100 µm bis 300 µm, gearbeitet wird.

4. Verfahren nach einem der Ansprüche 1 bis 3, **dadurch gekennzeichnet, dass** die betreffende Glasplatte bzw. Glasscheibe (1) eine Materialstärke (S) im Bereich von 3 mm bis 20 mm aufweist.

5. Verfahren nach einem der Ansprüche 1 bis 4, **dadurch gekennzeichnet, dass** der Laserstrahl (4) einen Fokusdurchmesser im Bereich von 100 µm bis 400 µm, insbesondere im Bereich von 100 µm bis 300 µm und vorzugsweise zwischen 200 µm und 300 µm aufweist.

6. Verfahren nach einem der Ansprüche 1 bis 5, **dadurch gekennzeichnet, dass** der Laserstrahl (4) mittels einer Strahlführung (5, 6) und/oder einer Werkstückführung (8) die einzelnen Lasermarkierungen (3) jeweils per Einzelschuss erzeugt.

7. Verfahren nach Anspruch 6, **dadurch gekennzeichnet, dass** die Strahlführung (5, 6) und/oder die Werkstückführung (8) während des Einzelschusses angehalten werden.

8. Verfahren nach einem der Ansprüche 1 bis 7, **dadurch gekennzeichnet, dass** zumindest ein Sensor (14) zur Messung der Pulsenergie vorgesehen wird, dessen Sensorwerte zur Steuerung/Regelung der Pulsenergie ausgewertet werden.

9. Vorrichtung zum Bearbeiten der Oberfläche von vorgespannten Gläsern, insbesondere von thermisch vorgespannten Glasplatten oder Glasscheiben (1), vorzugsweise zur Durchführung des Verfahrens nach einem der Ansprüche 1 bis 8, mit einer gepulsten Laserquelle (2), und mit einer Strahlführung (5, 6) und/oder einer Werkstückführung (8), **dadurch gekennzeichnet, dass** die Laserquelle (2) Einzelpulse mit einer Pulsenergie von 10 mJ bis 50 mJ erzeugt, die in die betreffende Glasplatte oder Glasscheibe (1) bis maximal zur Zonengrenze (1c), insbesondere bis maximal hälftig zur Zonengrenze (1c), in die Oberfläche eindringen.

10. Vorrichtung nach Anspruch 9, **dadurch gekennzeichnet, dass** eine Steuereinheit (11) vorgesehen ist, welche sicherstellt, dass nicht mehrmals eine Stelle des Glases bzw. der betreffenden Glasplatte oder Glasscheibe (1) bearbeitet wird.
